# EUROPEAN PATENT APPLICATION

(11) **EP 3 270 353 A1**
(43) Date of publication of application: **17.01.2018**
(21) Application number: 17179367.2
(22) Date of filing: 03.07.2017
(51) Int. Cl.: G06T 1/00, G06T 7/00, G06K 9/00

(54) **PROCESS DETERMINING APPARATUS AND PROCESS DETERMINING METHOD**

(30) Priority: 11.07.2016 JP 2016137030
(71) Applicant: Ricoh Company, Ltd., Tokyo 143-8555 (JP)
(72) Inventor: KOMOTO, Shotaro, Tokyo, 143-8555 (JP)
(74) Representative: J A Kemp

(57) **Abstract**

A process determining apparatus (1) includes an imaging apparatus (2) and a determination unit (3). The imaging apparatus (2) captures a plurality of images of operations of an operating unit (5) that performs a plurality of processes on a target object (6) according to an operation sequence. The determination unit (3) determines whether the plurality of processes is normally performed based on the plurality of operation images captured by the imaging apparatus. The determination unit extracts a stop location in which the target object has stopped in one of the plurality of processes from the plurality of operation images, stores a particular image of the target object in the extracted stop location as a reference image, and compares the stored reference image with an acquisition image acquired in the one of the plurality of processes to determine whether the one of the plurality of processes is normally performed.

## Description

### BACKGROUND

### Technical Field

Exemplary aspects of the present disclosure relate to a process determining apparatus and a process determining method.

### Related Art

In recent years, the manufacturing industry has expanded its emphasis in automation of production process by using machinery such as a robot. Meanwhile, a malfunction in the automated process in a place where no worker is involved must be promptly identified to increase a facility operating rate. Accordingly, there is a technique for determining whether the process is normal or malfunctioning based on image comparison and difference calculation. In particular, a position or orientation of a production facility or workpiece is observed using images captured by a camera. Such images are compared with an image in a normal state, and a difference is calculated. Since the technique has difficulty in determining a time when the image in the normal state or the image for the determination should be snipped as a static image from pictures captured by the camera, a determination unit and a receiving unit are used. The determination unit makes a determination at a certain time interval, whereas the receiving unit receives a timing signal indicating that a workpiece has stopped at a predetermined position from a production facility.

In multi-item small production, multiple items are often produced in one production facility, and a tact time of such a production facility is not always constant. Thus, the determination unit needs to perform a cumbersome task of setting a tact time for each item. Moreover, even if a time when the camera captures an image is slightly shifted due to a delay, there is a possibility the receiving unit may observe blurred images captured before and after the workpiece stops. In such a case, a normal determination cannot be made. Accordingly, a technique (e.g., JP-4349298-B1 (JP-2006-228029-A)) has been proposed to solve such problems. According to the technique, sampling images of a movable unit of an apparatus are captured at predetermined time intervals, and a distance between a position of a marker attached to the apparatus and a position of a marker in a normal state is determined by calculating a difference between the positions. Then, the calculated distance and a threshold value are compared to determine whether a process is normal or malfunctioning.

The technique disclosed in JP-4349298-B1 (JP-2006-228029-A) may be used in a production facility in which a tact time is not constant in multi-item small production. In such a case, the use of the technique disclosed in JP-4349298-B1 (JP-2006-228029-A) not only consumes longer time to set an image determination time, but also increases the degree of difficulty in setting the image determination time. When determination trigger signals need to be exchanged between a robot that actually conveys a workpiece and the camera which determines an image, the camera may not be able to acquire a correct image to be used for the determination due to influence of an image acquisition delay or influence of a wiring state of a signal wire depending on a type of the camera. The present disclosure has been made to solve the above problems. Moreover, the present disclosure has an object to provide a process determining apparatus and a process determining method capable of reliably making a determination by acquiring a suitable determination time based on images captured for the determination.

### SUMMARY

In at least one embodiment of this disclosure, there is provided an improved process determining apparatus that includes an imaging apparatus and a determination unit. The imaging apparatus captures a plurality of operation images of an operating unit that performs a plurality of processes on a target object according to an operation sequence. The determination unit determines whether the plurality of processes is normally performed based on the plurality of operation images of the operating unit captured by the imaging apparatus. The determination unit extracts a stop location in which the target object has stopped in one of the plurality of processes from the plurality of operation images, stores a particular image of the target object in the extracted stop location as a reference image, and compares the stored reference image with an acquisition image acquired in the one of the plurality of processes to determine whether the one of the plurality of processes is normally performed.

In at least one embodiment of this disclosure, there is provided an improved process determining method that includes capturing and determining. The capturing captures a plurality of images of operations of an operating unit that performs a plurality of processes on a target object according to an operation sequence. The determining determines whether the plurality of processes is normally performed based on the plurality of captured operation images of the operating unit. The determining includes a first process in which a stop location in which the target object has stopped in one of the plurality of processes is extracted from the plurality of operation images, a second process in which a particular image of the target object in the extracted stop location is stored as a reference image, and a third process in which the reference image and an acquisition image acquired in the one of the plurality of processes are compared to determine whether the one of the plurality of processes is normally performed.

According to the present disclosure, since setting of a trigger region as a determination trigger and determination of whether a process is normal are performed using only images captured by the imaging apparatus, the imaging apparatus and the operating unit do not need to exchange the determination trigger. Thus, such a configuration can reliably prevent a failure caused by influence of an image acquisition delay or influence of a wiring state of a signal wire, and enables normal/malfunction determination to be more reliably and easily performed.

### BRIEF DESCRIPTION OF THE DRAWINGS

The aforementioned and other aspects, features, and advantages of the present disclosure would be better understood by reference to the following detailed description when considered in connection with the accompanying drawings, wherein:
FIG. 1 is a schematic diagram illustrating a process determining apparatus according to an exemplary embodiment;
FIG. 2 is a control block diagram of a determination unit according to the exemplary embodiment;
FIG. 3 is a schematic diagram illustrating a work process in which an imaging apparatus is disposed according to the exemplary embodiment;
FIG. 4 is a flowchart illustrating a normal image registration operation according to the exemplary embodiment;
FIGs. 5A and 5B are schematic diagrams illustrating a trigger region setting according to the exemplary embodiment;
FIG. 6 is a schematic diagram illustrating the trigger region setting according to the exemplary embodiment;
FIGs. 7A and 7B are schematic diagrams illustrating a determination region setting according to the exemplary embodiment;
FIG. 8 is a flowchart illustrating a process determining operation according to the exemplary embodiment;
FIG. 9 is a flowchart illustrating a normal/malfunction determination according to the exemplary embodiment; and
FIG. 10 is a schematic diagram illustrating one example of a process determination result according to the exemplary embodiment.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner and achieve similar results.

Although the exemplary embodiments are described with technical limitations with reference to the attached drawings, such description is not intended to limit the scope of the disclosure and all of the components or elements described in the exemplary embodiments of this disclosure are not necessarily indispensable.

Referring now to the drawings, exemplary embodiments of the present disclosure are described below. In the drawings for explaining the following exemplary embodiments, the same reference codes are allocated to elements (members or components) having the same function or shape and redundant descriptions thereof are omitted below.

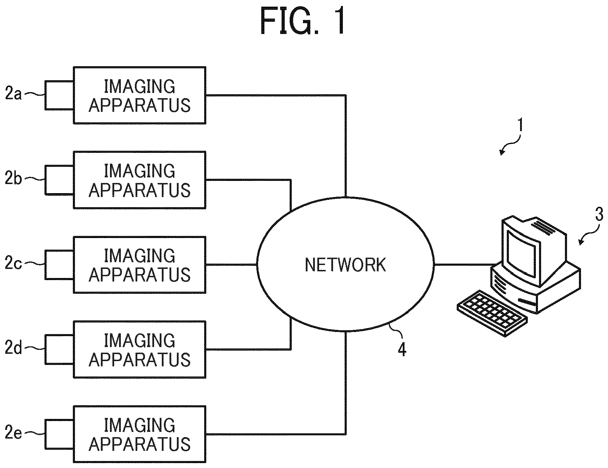

FIG. 1 illustrates a process determining apparatus 1 according to an exemplary embodiment. In FIG. 1, the process determining apparatus 1 includes a plurality of imaging apparatuses 2a, 2b, 2c, 2d, and 2e as cameras, and a personal computer 3 as a determination unit (hereinafter referred to as a determination unit 3). Since each of the imaging apparatuses 2a, 2b, 2c, 2d, and 2e is similar to every other, the imaging apparatuses 2a, 2b, 2c, 2d, and 2e are collectively called imaging apparatuses 2 in the following description. Each of the imaging apparatuses 2 and the determination unit 3 are connected via a network 4. Each of the imaging apparatuses 2 is disposed with respect to each process performed by an operating unit 5 which will be described below. A plurality of imaging apparatuses 2 may be disposed with respect to one process. The determination unit 3 is connected to an external device such as a hard disk drive (HDD), so that image data captured by each of the imaging apparatuses 2 and each setting data are stored in the external device. The network 4 as an information transmission path includes a universal serial bus (USB) and a local area network (LAN) cable.

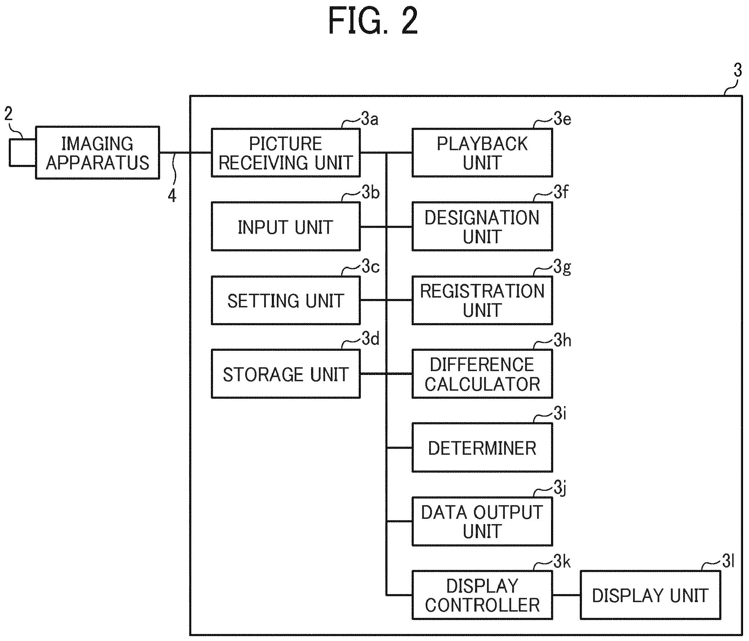

FIG. 2 illustrates a control block diagram of the determination unit 3. As illustrated in FIG. 2, the determination unit 3 includes a picture receiving unit 3a, an input unit 3b, a setting unit 3c, and a storage unit 3d. The picture receiving unit 3a acquires an image from each of the imaging apparatuses 2. The input unit 3b is used when an operation is input for each of various settings. The setting unit 3c sets various information, and the storage unit 3d stores image data and the various setting information. Moreover, the determination unit 3 includes a playback unit 3e, a designation unit 3f, a registration unit 3g, and a difference calculator 3h. The playback unit 3e plays back an acquisition image or a picture of a video file, and the designation unit 3f designates a particular region within image data. The registration unit 3g is a member in which coordinates of the particular region and a reference image within the particular region are registered. The difference calculator 3h calculates a difference between two images. Moreover, the determination unit 3 includes a determiner 3i, a data output unit 3j, a display controller 3k, and a display unit 31. The determiner 3i determines whether a process is normal or malfunctioning based on a difference between the reference image which has been stored and the acquisition image which has been acquired. The data output unit 3j outputs determination result data provided by the determiner 3i. The display controller 3k controls a display operation, and the display unit 31 displays various data.

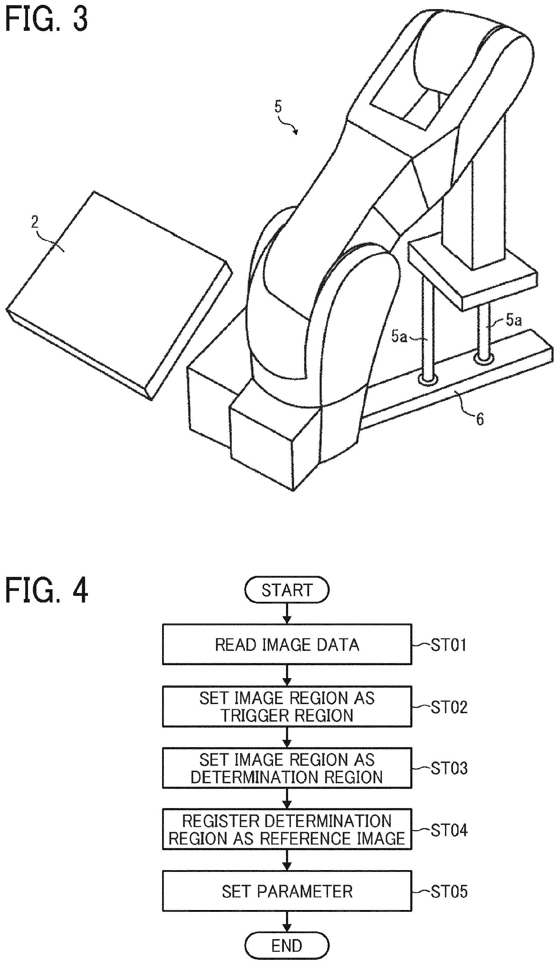

FIG. 3 is a schematic diagram illustrating a work process in which the imaging apparatus 2 of the process determining apparatus 1 is disposed according to the exemplary embodiment. In FIG. 3, the operating unit 5 as a robot includes an adsorption unit 5a, so that a workpiece 6 as a target object is adsorbed and retained at a tip of the adsorption unit 5a. In the exemplary embodiment, for example, the operating unit 5 is a folding robot, the workpiece 6 is a paper box, and the process determining apparatus 1 determines whether the workpiece 6 is correctly arranged in a predetermined position. The imaging apparatus 2 successively capture images of operation and movement of the operating unit 5 and the workpiece 6.

FIG. 4 is a flowchart illustrating an operation performed when the process determining apparatus 1 stores a reference image. That is, FIG. 4 is a flowchart illustrating a normal image registration operation. Hereinafter, the normal image registration operation of the process determining apparatus 1 is described. First, an operation instruction is transmitted to the process determining apparatus 1, and a signal for the normal image registration operation is input. When such a signal is input, the imaging apparatus 2 is fixed to capture images of a series of operations of the operating unit 5 in operation. In step ST01, the determination unit 3 reads the image data captured by the imaging apparatus 2 from the storage unit 3d after the images are captured by the imaging apparatus 2. Subsequently, in step ST02, the determination unit 3 sets an image region that is used for a difference process for finding a determination time of a reference image as a trigger region.

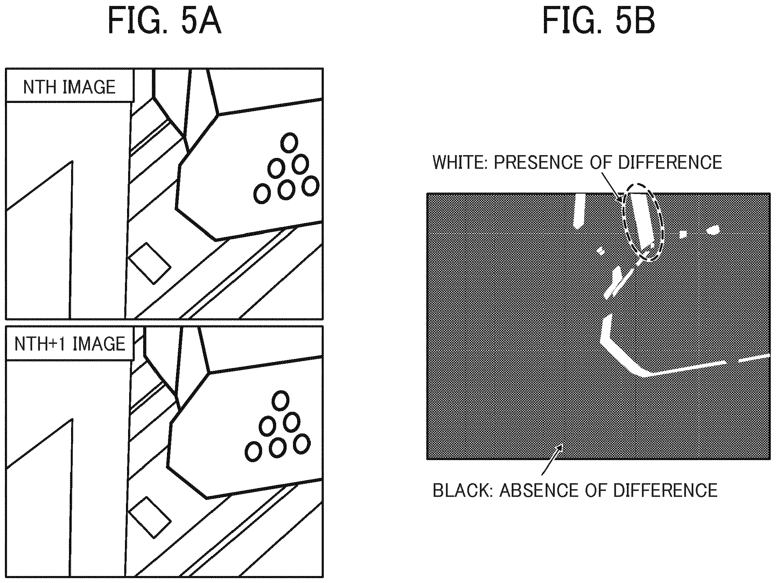

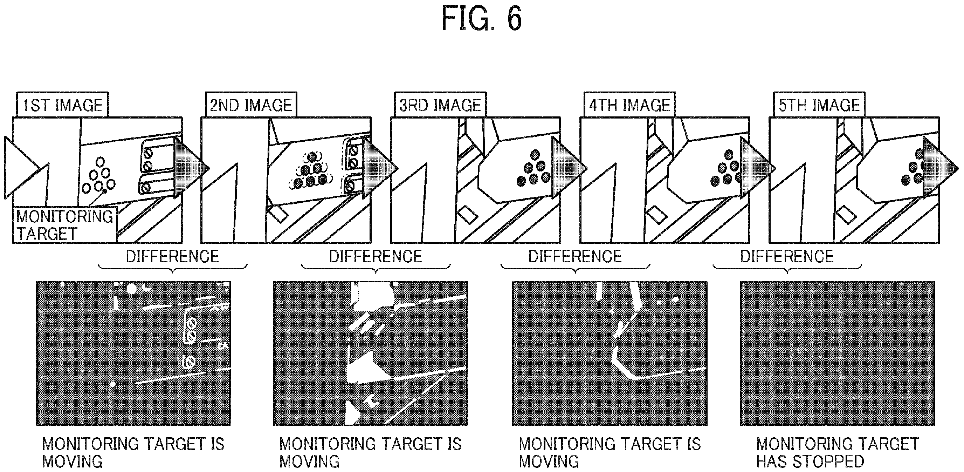

When the trigger region is set, the determination unit 3 extracts two images at predetermined times from successive image data as illustrated in FIG. 5A to determine whether each image, that is, the workpiece 6, has stopped. In the exemplary embodiment, each of the images is generated as a binarized image as illustrated in FIG. 5B, and a position of the binarized image is determined. When each of the images has a difference as illustrated in FIG. 5B, that is, it is determined that there is movement, images are successively extracted as illustrated in FIG. 6. The workpiece 6 as a monitoring target is monitored until the workpiece 6 stops, and a position in which the workpiece 6 has stopped is set as the trigger region. In the exemplary embodiment, when the two binarized images become completely black, it is determined that the workpiece 6 has stopped. However, the two binarized images barely become complete black. Thus, if black has a threshold value or higher (e.g., if an area ratio of the black is a predetermined value α or higher), it is determined that the workpiece 6 has stopped.

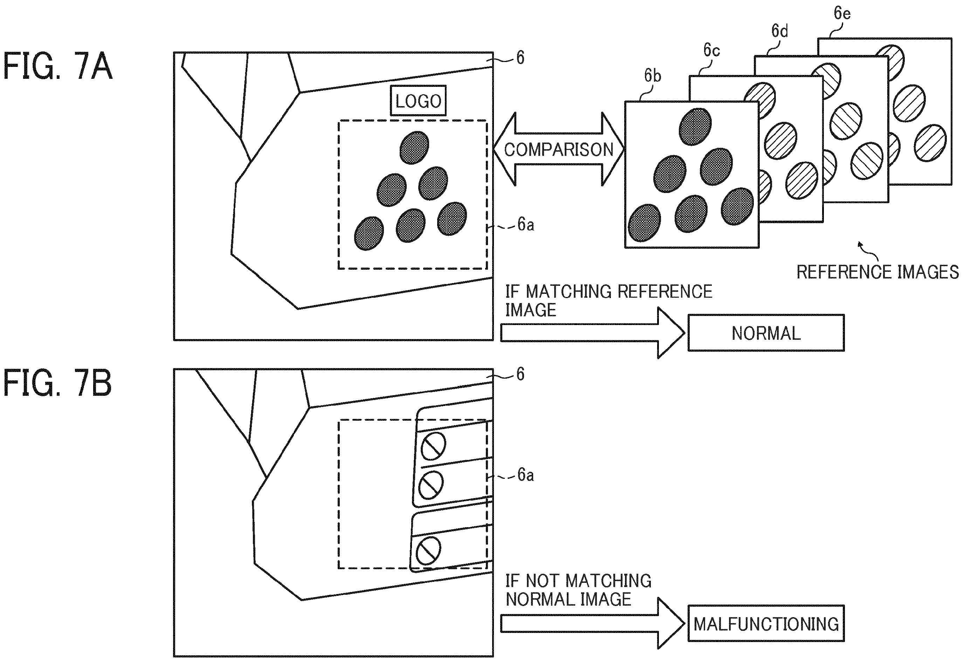

Subsequently, in step ST03, the determination unit 3 sets an image region that is used for a difference process for determining whether the workpiece 6 in the stop location is normal as a determination region. As illustrated in FIG. 7A, the determination region is set by extracting a distinctive portion that is a particular image of the workpiece 6. For example, a logo mark is extracted to set the determination region. In step ST04, the determination unit 3 sets a portion of the workpiece 6 corresponding to the logo mark as a determination region 6a, and snips the determination region 6a as a reference image to register the determination region 6a as the reference image (hereinafter also referred to as the reference image 6a) in the registration unit 3g. In the exemplary embodiment, the determination unit 3 compares the set reference image with the acquisition image acquired in the process to be determined. The set reference image and the acquisition image do not need to completely match each other. If the set reference image matches the acquisition image with a certain matching rate (e.g., if an area matching ratio is a predetermined value β or higher), the determination unit 3 determines that the set reference image and the acquisition image match each other.

In step ST05, the determination unit 3 sets a parameter after the reference image 6a is registered. Herein, the parameter is a threshold value of each difference calculation value, and includes the threshold value α of the trigger region setting described above in step ST02 and the threshold value β of the matching ratio described above in step ST04. In the exemplary embodiment, for example, the threshold values α and β are respectively set to 98% and 95%. When a series of such setting processes is finished, the normal image registration operation ends.

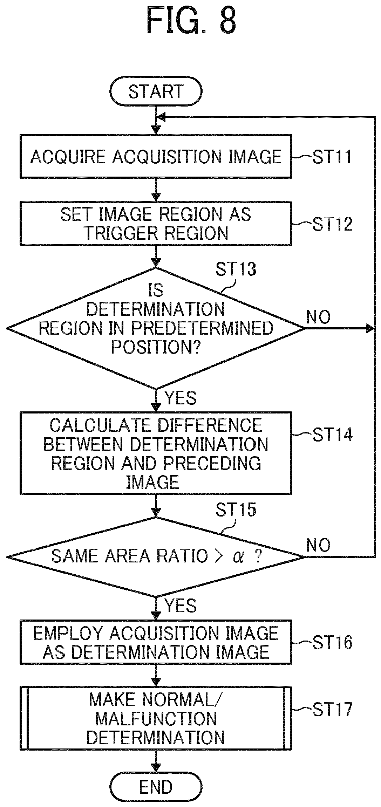

Next, a process determining operation performed by the process determining apparatus 1 is described with reference a flowchart illustrated in FIG. 8. The process determining operation is performed after the normal image registration operation described in FIG. 4 ends. In step ST11, when a process determining operation instruction is input to the process determining apparatus 1, the determination unit 3 reads image data captured by the imaging apparatus 2 from the storage unit 3d to acquire an image for process determination. That is, the determination unit 3 acquires an acquisition image.

Subsequently, in step ST12, the determination unit 3 sets an image region that is used for a difference process for finding a determination time of the acquisition image as a trigger region. In step ST13, the determination unit 3 determines whether the determination region is roughly in a predetermined position. In step ST14, the determination unit 3 binarizes a determination region acquired as similar to the above acquisition and a preceding image to calculate a difference between the determination region and the preceding image. In step ST15, the determination unit 3 determines whether a same area ratio exceeds a threshold value α. If the same area ratio is the threshold value α or lower (NO in step ST15), the process returns to step ST11 in which an acquisition image is acquired again. On the other hand, if the same area ratio exceeds the threshold value α (YES in step ST15), the process proceeds to step ST16 in which the determination unit 3 employs such an acquisition image as a determination image. In step ST17, the determination unit 3 determines whether the process is normal.

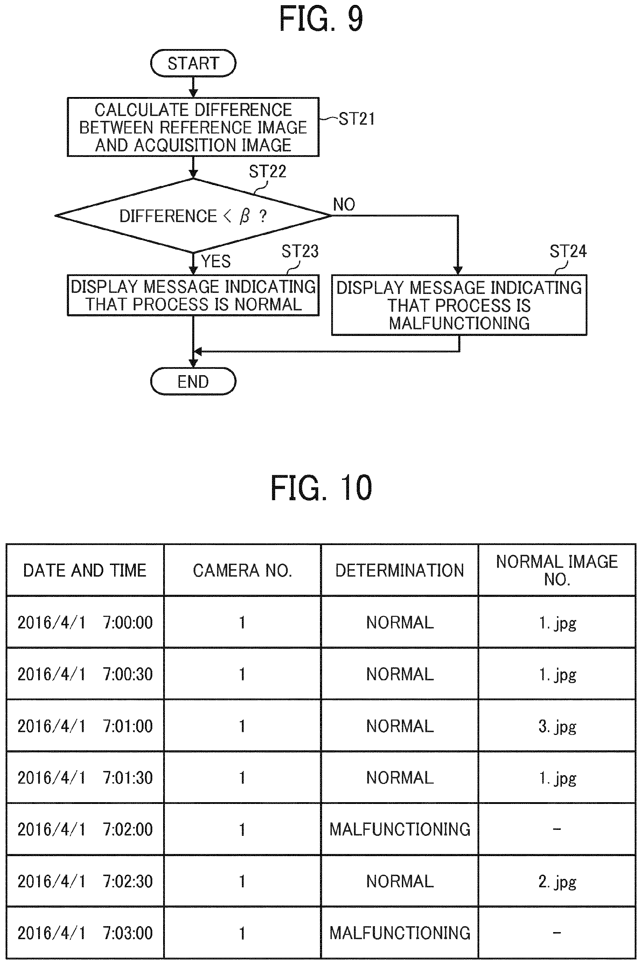

An operation of the normal/malfunction determination in step ST17 of the flowchart illustrated in FIG. 8 is described with reference to the flowchart illustrated in FIG. 9. In step ST21, when the determination operation is started, the determination unit 3 reads registered reference images (images 6b, 6c, 6d, and 6e illustrated in FIG. 7A) from the registration unit 3g. In step ST22, the determination unit 3 compares each of the reference images 6b, 6c, 6d, and 6e with the acquisition image acquired in step ST11 of the flowchart illustrated FIG. 8 to calculate a difference. If the calculated difference is less than a threshold value β (YES in step ST22), that is, an area matching ratio exceeds the threshold value β, the process proceeds to step ST23. In step ST23, the determination unit 3 determines that the process is normal, and displays a message indicating the normal process on the display unit 31. Then, the determination operation ends. On the other hand, if the calculated difference exceeds the threshold value β (NO in step ST22), that is, the area matching ratio is less than the threshold value β, the process proceeds to step ST24. In step ST24, the determination unit 3 determines that the process is malfunctioning, and displays a message indicating the malfunctioning process on the display unit 31. Then, the determination operation ends. FIG. 10 is a schematic diagram illustrating one example of an output result of the process determining operation performed by the process determining apparatus 1. The example illustrated in FIG. 10 includes an imaging apparatus number, a process determination result, and a normal image number. However, the output result is not limited thereto. Moreover, the result may be displayed on the display unit 31 or printed out.

According to the exemplary embodiment, the process determining operation is performed. In such an operation, a stop location in which the workpiece 6 has stopped is extracted based on operation images. Subsequently, a particular image of the workpiece 6 in the stop location is extracted, and the extracted image is stored as the reference image 6a. Accordingly, the determination unit 3 compares the stored reference image 6a with an acquisition image acquired in a process to be determined to determine whether the process to be determined is normally performed. Such a configuration enables setting of a trigger region as a determination trigger and determination of whether the process is normal to be performed using only images captured by the imaging apparatus 2. Thus, the imaging apparatus 2 and the operating unit 5 do not need to exchange the determination trigger. Therefore, such a configuration can reliably prevent a failure caused by influence of an image acquisition delay or influence of a wiring state of a signal wire, and enables a normal/malfunction determination to be more reliably and easily performed.

Moreover, the trigger region is acquired in the stop location in which the workpiece 6 has completely stopped. Such acquisition can prevent a failure caused by a shift in angle or a shift in time when an image is captured by the imaging apparatus 2, and thus process determination can be performed with accuracy. Moreover, the process determining apparatus 1 performs the process determining method, so that the imaging apparatus 2 and the operating unit 5 do not need to exchange a determination trigger. Hence, a failure caused by influence of an image acquisition delay or influence of a wiring state of a signal wire can be reliably prevented, and normal/malfunction determination can be more reliably and easily performed.

The present disclosure has been described above with reference to specific exemplary embodiments but is not limited thereto. Various modifications and enhancements are possible without departing from scope of the disclosure. It is therefore to be understood that the present disclosure may be practiced otherwise than as specifically described herein. For example, elements and/or features of different illustrative exemplary embodiments may be combined with each other and/or substituted for each other within the scope of the present disclosure.

## Claims

1. A process determining apparatus (1) comprising:
an imaging apparatus (2) to capture a plurality of operation images of an operating unit (5) that performs a plurality of processes on a target object (6) according to an operation sequence; and
a determination unit (3) to determine whether the plurality of processes is normally performed based on the plurality of operation images of the operating unit captured by the imaging apparatus,
wherein the determination unit extracts a stop location in which the target object has stopped in one of the plurality of processes from the plurality of operation images, stores a particular image of the target object in the extracted stop location as a reference image, and compares the stored reference image with an acquisition image acquired in the one of the plurality of processes to determine whether the one of the plurality of processes is normally performed.

2. The process determining apparatus according to claim 1, wherein the determination unit determines the stop location based on a difference of the plurality of operation images.

3. The process determining apparatus according to claim 2, wherein the determination unit binarizes the plurality of operation images to determine the difference.

4. The process determining apparatus according to claim 3, wherein the difference is determined based on a predetermined threshold value.

5. A process determining method comprising:
capturing a plurality of images of operations of an operating unit that performs a plurality of processes on a target object according to an operation sequence; and
determining whether the plurality of processes is normally performed based on the plurality of captured operation images of the operating unit,
wherein the determining includes a first process in which a stop location in which the target object has stopped in one of the plurality of processes is extracted from the plurality of operation images, a second process in which a particular image of the target object in the extracted stop location is stored as a reference image, and a third process in which the reference image and an acquisition image acquired in the one of the plurality of processes are compared to determine whether the one of the plurality of processes is normally performed.
